# EUROPÄISCHE PATENTSCHRIFT

(11) **EP 1 654 774 B1**
(45) Veröffentlichungstag und Bekanntmachung des Hinweises auf die Patenterteilung: **22.11.2006**
(21) Anmeldenummer: 04741346.3
(22) Anmeldetag: 31.07.2004
(51) Int. Cl.: H01M 2/18, H01M 2/16, H01M 10/14

(54) **SEPARATOR FÜR EINEN BLEIAKKUMULATOR**
SEPARATOR FOR A LEAD BATTERY
SEPARATEUR POUR ACCUMULATEUR AU PLOMB

(30) Priorität: 09.08.2003 EP 03018203
(43) Veröffentlichungstag der Anmeldung: 10.05.2006
(73) Patentinhaber: DARAMIC, INC., North Charleston, SC 29406 (US)
(72) Erfinder: BÖHNSTEDT, Werner, 24558 Henstedt-Ulzburg (DE)
(74) Vertreter: Schröder, Richard
(86) Internationale Anmeldenummer: PCT/EP2004/008620
(87) Internationale Veröffentlichungsnummer: WO 2005/015661

(56) Entgegenhaltungen:
- EP-A- 0 899 801
- EP-A- 0 994 518
- WO-A-00/63983
- US-A- 5 679 479
- US-A- 5 789 103
- PATENT ABSTRACTS OF JAPAN Bd. 2000, Nr. 09, 13. Oktober 2000 (2000-10-13) & JP 2000 182593 A (NIPPON MUKI CO. LTD.), 30. Juni 2000 (2000-06-30) in der Anmeldung erwähnt

## Beschreibung

Die Erfindung betrifft einen für die Verwendung in einem Bleiakkumulator, geeigneten Separator aus elastischem Kunststoff, bestehend aus blattförmigem Material mit einem Innenbereich und zwei Randbereichen, welches zumindest auf einer Seite in Längsrichtung verlaufende Rippen aufweist, wobei die im Innenbereich verlaufenden Rippen einen größeren Abstand voneinander aufweisen als die im Randbereich verlaufenden Rippen, und einen Bleiakkumulator, der derartige Separatoren enthält.

Bei den heute in Bleiakkumulatören eingesetzten Separatoren handelt es sich um mikroporöse Folien aus blattförmigem Material, die Kurzschlüsse zwischen benachbarten, entgegengesetzte Polarität aufweisenden Elektrodenplatten sowie ein Herausfallen von Plattenmaterial verhindern, aufgrund ihrer Porenstruktur jedoch einen ionischen Stromfluss im Elektrolyt zulassen. Derartige Separatoren sind beispielsweise aus US 3 351 495, US 4 927 722, US 5 776 630 oder WO 01/13 442 bekannt. Üblicherweise sind solche Separatoren zumindest einseitig mit Längsrippen versehen, die den direkten Kontakt des blattförmigen Materials mit der positiven Elektrodenplatte vermeiden sollen. Gleichzeitig verleihen diese Rippen dem Separator eine gewisse Steifigkeit in Längsrichtung. Derartige Längsrippen können auch, wie dies in der US 5 679 479 oder der US 5 789 103 beschrieben wird, aus einer Vielzahl einzelner Reliefprägungen bestehen, die eine Rippenstruktur aus alternierenden Kämmen und Furchen ausbilden.

Die Herstellung der Separatoren erfolgt in der Regel durch Extrudieren eines thermoplastischen Kunststoffs zu einer Folie, welche anschließend zu einem blattförmigen Material mit den vorgesehenen Rippen gewalzt wird, wonach der Porenbildner, zum Beispiel Mineralöl, extrahiert wird und das so entstandene blattförmige Material zu Rollen aufgewickelt wird. Dieses blattförmige Material wird später von der Rolle abgezogen und in Streifen der gewünschten Breite geschnitten. Diese Streifen werden auf die gewünschte Länge geschnitten und danach entweder über eine positive oder eine negative Elektrodenplatte gefaltet, wodurch eine Tasche gebildet wird, deren beiden Randbereiche miteinander, beispielsweise durch Verschweißen, Pressschweißen oder anderen an sich bekannten Verfahren verbunden werden. Anschließend werden die Elektrodenplatten, jeweils eine in einer Separatortasche abwechselnd mit Elektrodenplatten ohne Tasche entgegengesetzter Polarität zu Gruppen für eine Akkumulatorenzelle zusammengestellt. In der Regel werden nur die Elektrodenplatten einer Polarität in Separatortaschen eingesetzt; in Spezialfällen können jedoch auch die Elektrodenplatten beider Polaritäten in Separatortaschen eingesetzt sein. Innerhalb einer Gruppe werden nun die Elektrodenplatten ausgerichtet und danach miteinander verbunden. Die Ausrichtung der Elektrodenplatten kann bewirken, dass einzelne Elektrodenplatten mehr oder weniger weit in den einen oder anderen Randbereich einer Separatortasche geschoben werden. Da die Elektrodenplatten herstellungsbedingt häufig Spitzen oder scharfe Kanten aufweisen, kann durch dieses Verschieben die Spitze oder Kante der Elektrodenplatte das blattförmige Material durchstoßen, wodurch sich ein Kurzschluss mit der Nachbarelektrode ausbilden kann. Dies gilt umso mehr, wenn Elektrodenplatten verwendet werden, die aus einem verstreckten Gitter, beispielsweise aus Streckmetall, bestehen, in welches das eigentliche aktive Material eingelagert ist, wie sie beispielsweise in EP 0 994 518 A1 beschrieben sind. Hier kann es vorkommen, dass das verstreckte Material nicht exakt in den Knoten geschnitten ist, so dass einzelne Drähte überstehen, die sich beim Ausrichten der Elektrodenplatten leicht verbiegen und das blattförmige Material des Separators durchdringen.

Um die Gefahr des Durchdringens der Spitzen, Kanten oder Drähte der Elektrodenplatten zumindest zu verringern, wurde bereits vorgeschlagen, den Randbereich mit einer Vielzahl von parallelen konkaven Furchen zwischen einer Vielzahl von gleich geformten Rippen auszubilden (EP 0 899 801, JP 2000-182593) bzw. die Rippen zwischen den Furchen breiter und mit einer flachen Oberfläche auszubilden (WO 00/63983). Allerdings hat sich gezeigt, dass in ungünstigen Fällen es doch noch vorkommen kann, dass einzelne Separatortaschen beim Ausrichten der Elektrodenplatten durchstoßen werden, wodurch wiederum die Gefahr eines Kurzschlusses gegeben ist.

Es ist deshalb Aufgabe der vorliegenden Erfindung, den Separator der letzt genannten Art weiter zu verbessern, um die Gefahr des Durchstoßens von Elektrodenplatten durch das blattförmige Material des Separators weiter zu verringern, sowie einen Bleiakkumulator, der solche Separatoren enthält, zur Verfügung zu stellen.

Diese Aufgabe wird bei einem für die Verwendung in einem Bleiakkumulator geeigneten Separator aus elastischem Kunststoff, bestehend aus blattförmigem Material mit einem Innenbereich und zwei Randbereichen, welches zumindest auf einer Seite in Längsrichtung verlaufende Rippen aufweist, wobei die im Innenbereich verlaufenden Rippen einen größeren Abstand voneinander aufweisen als die im Randbereich verlaufenden Rippen, dadurch gelöst, dass mindestens die an den Innenbereich angrenzenden ersten 3 Rippen im Randbereich einen Querschnitt im Wesentlichen in Form eines aus dem blattförmigen Material herausragenden Dreiecks mit einer Grundseite auf dem blattförmigen Material und einem zum Innenbereich hin angeordneten und einem zum Rand hin angeordneten Schenkel aufweisen, wobei der zum Innenbereich hin angeordnete Schenkel länger ist als der zum Rand hin angeordnete Schenkel.

Der zum Innenbereich hin angeordnete Schenkel, welcher länger ausgebildet ist als der zum Rand hin angeordnete Schenkel, führt das an diesen Schenkel beim Ausrichten anstoßende Elektrodenmaterial von dem blattförmigen Material weg, so dass ein Durchstoßen des blattförmigen Materials wirksam unterbunden werden kann.

Es hat sich als besonders vorteilhaft herausgestellt, wenn der zum Innenbereich hin angeordnete Schenkel 1,5 bis 15 mal, bevorzugt 2 bis 6 mal, insbesondere 2 bis 4 mal so lang ist wie der zum Rand hin angeordnete Schenkel. Durch das Längenverhältnis der beiden Schenkel kann in besonders einfacher Weise die Ablenkung der Kante der Elektrodenplatte, abhängig von deren mechanischen Eigenschaften, weg vom blattförmigen Material sichergestellt werden. Welches Längenverhältnis für welche Elektrodenplatte besonders günstig ist, kann der Fachmann durch einfache Versuche ermitteln.

Auch hat es sich als günstig erwiesen, wenn der zum Innenbereich hin angeordnete Schenkel einen Winkel von 5° bis 40° mit der Grundseite einschließt. Bei den heute verwendeten Elektrodenplatten hat sich ein Winkel zwischen dem zum Innenbereich hin angeordneten Schenkel und der Grundseite von 8° bis 30° bestens bewährt.

Eine Dicke des blattförmigen Materials im Bereich von 0,05 bis 0,35 mm, insbesondere zwischen 0,08 und 0,25 mm hat sich bestens bewährt. Es versteht sich von selbst, dass diese Dicke zwischen benachbarten Rippen gemessen ist.

Um die Stabilität der Rippen im Randbereich zu erhöhen, hat es sich als zweckmäßig erwiesen, wenn der zum Innenbereich hin angeordnete Schenkel mit dem zum Rand hin angeordneten Schenkel einen Winkel von 75° bis 115° einschließt. Ein Winkel zwischen 80° und 100° ist in vielen Fällen optimal.

Besonders vorteilhaft weisen alle Rippen im Randbereich denselben Querschnitt auf.

Üblicher Weise sind 3 bis 30 Rippen pro cm im Randbereich angeordnet, deren obere Kante von dem blattförmigen Material bevorzugt 0,1 bis 0,8 mm entfernt ist.

Gegenstand der vorliegenden Erfindung ist auch ein Bleiakkumulator, enthaltend mehrere parallel zueinander angeordnete Elektroden, wobei benachbarte Elektroden entgegengesetzte Polarität aufweisen und zumindest die Elektroden einer Polarität in jeweils einen zu einer Tasche gefalteten und an den Rändern der Randbereich verbundenen, erfindungsgemäßen Separator eingesetzt sind.

Die Erfindung wird anhand der nachfolgenden Figuren näher erläutert.

Es zeigen:
Figur 1 eine Draufsicht auf einen erfindungsgemäßen Separator
Figur 2 einen Schnitt AA gemäß Figur 1

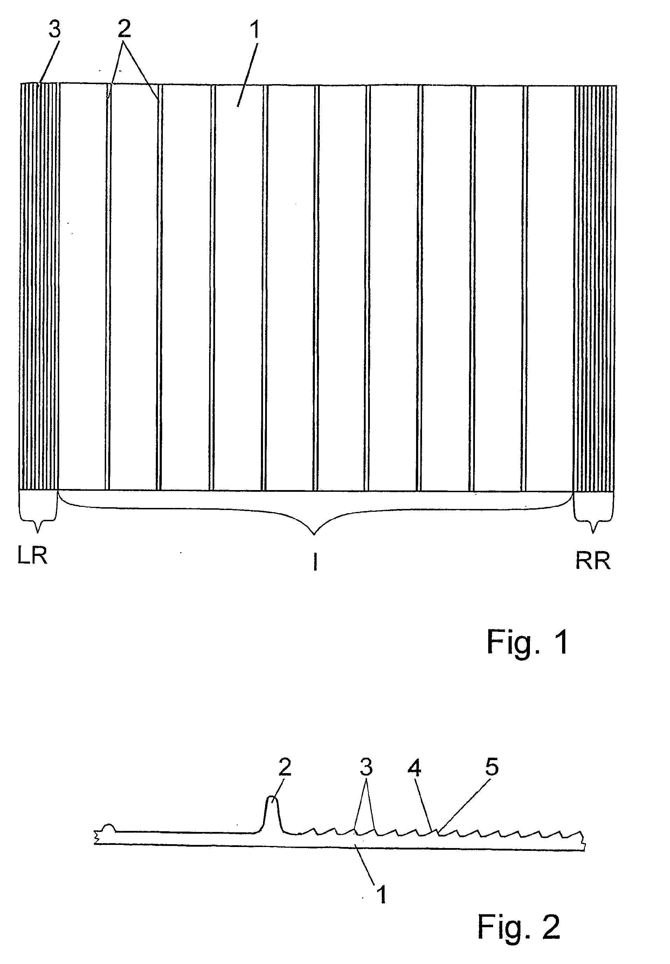

Der Separator gemäß Figur 1 weist einen Innenbereich 1 und rechts und links von diesem Innenbereich 1 je einen rechten Randbereich RR und einen linken Randbereich LR auf. Auf dem blattförmigen Material 1 sind Rippen 2 im Innenbereich und Rippen 3 in den beiden Randbereichen RR und LR angeordnet. Der Abstand zwischen den Rippen 2 im Innenbereich ist größer als der Abstand der Rippen 3 im Randbereich.

Derartige Separatoren werden in der Regel als Endlosmaterial, beispielsweise durch Extrudieren, anschließendem Walzen und Extrahieren des Poren bildenden Mineralöls, hergestellt und danach auf Länge geschnitten. Die auf Länge geschnittenen Separatoren werden dann senkrecht zur den Rippenrichtung um jeweils eine Elektrodenplatte gefaltet und zu einer Tasche zusammengelegt, wobei die in der Figur dargestellten Rippen gegeneinander zeigen, wenn es sich um eine positive Elektrodenplatte handelt, bzw. von der Elektrodenplatte weg weisen, wenn es sich um eine negative Elektrodenplatte handelt. Um eine oben offene Tasche zu erzeugen, wird sowohl der rechte Rand als auch der linke Rand der gegenüberliegenden Teile des Separators mit einander verbunden.

In einem vergrößerten Ausschnitt AA gemäß Figur 1 ist noch die dem Rand am nächsten liegende Rippe 2 des Innenbereichs dargestellt. Dieser Rippe 2 folgen mehrere Rippen 3 des Randbereichs, welche jeweils einen Querschnitt im Wesentlichen in Form eines Dreiecks aufweisen, wobei das Dreieck eine Grundseite (nicht dargestellt) auf dem blattförmigen Material 1 aufweist und zwei Schenkel 4 und 5 besitzt, wobei der zum Innenbereich hin angeordnete Schenkel 4 länger ausgebildet ist als der zum Rand hin angeordnete Schenkel 5.

## Patentansprüche

1. Für die Verwendung in einem Bleiakkumulator geeigneter Separator aus elastischem Kunststoff, bestehend aus blattförmigem Material mit einem Innenbereich und zwei Randbereichen, welches zumindest auf einer Seite in Längsrichtung verlaufende Rippen aufweist, wobei die im Innenbereich verlaufenden Rippen einen größeren Abstand voneinander aufweisen als die im Randbereich verlaufenden Rippen, **dadurch gekennzeichnet, dass** mindestens die an den Innenbereich angrenzenden ersten 3 Rippen im Randbereich einen Querschnitt im Wesentlichen in Form eines aus dem blattförmigen Material herausragenden Dreiecks mit einer Grundseite auf dem blattförmigen Material, mit einem zum Innenbereich hin angeordneten Schenkel und einem zum Rand hin angeordneten Schenkel aufweisen, wobei der zum Innenbereich hin angeordnete Schenkel länger ist als der zum Rand hin angeordnete Schenkel.

2. Separator nach Anspruch 1, **dadurch gekennzeichnet, dass** der zum Innenbereich hin angeordnete Schenkel 1,5 bis 15 mal so lang ist wie der zum Rand hin angeordnete Schenkel.

3. Separator nach Anspruch 1 oder 2, **dadurch gekennzeichnet, dass** der zum Innenbereich hin angeordnete Schenkel einen Winkel von 5° bis 40° mit der Grundseite einschließt.

4. Separator nach einem oder mehreren der Ansprüche 1 bis 3, **dadurch gekennzeichnet, dass** der zum Innenbereich hin angeordnete Schenkel mit dem zum Rand hin angeordneten Schenkel einen Winkel von 75° bis 115° einschließt.

5. Separator nach einem oder mehreren der Ansprüche 1 bis 4, **dadurch gekennzeichnet, dass** das blattförmige Material eine Dicke von 0,05 bis 0,35 mm aufweist.

6. Separator nach einem oder mehreren der Ansprüche 1 bis 5, **dadurch gekennzeichnet, dass** alle Rippen im Randbereich denselben Querschnitt aufweisen.

7. Separator nach einem oder mehreren der Ansprüche 1 bis 6, **dadurch gekennzeichnet, dass** 3 bis 30 Rippen pro cm im Randbereich angeordnet sind.

8. Bleiakkumulator, enthaltend mehrere parallel zueinander angeordnete Elektroden, wobei benachbarte Elektroden entgegengesetzte Polarität aufweisen und zumindest die Elektroden einer Polarität in jeweils einen zu einer Tasche gefalteten und an den Rändern der Randbereich verbundenen Separator gemäß einem oder mehreren der Ansprüche 1 bis 7 eingesetzt sind.

## Claims

1. A separator made of elastic plastic and suitable for use in a lead storage battery, said separator consisting of sheet material with an inner region and two peripheral regions, and having ribs running in the longitudinal direction on at least one side, the ribs in the inner region being more widely spaced than those in the peripheral region, **characterised in that** at least the first 3 ribs in the peripheral region that are adjacent to the inner region have a cross-section essentially in the form of a triangle projecting from the level of the sheet material, with the base of the triangle on the sheet material, one side of the triangle facing the inner region and the other side facing the periphery, the side facing the inner region being longer than that facing the periphery.

2. Separator according to Claim 1, **characterised in that** the side of the triangle facing the inner region is 1.5 to 15 times as long as the side facing the periphery.

3. Separator according to Claim 1 or 2, **characterised in that** the side facing the inner region encloses an angle of 5° to 40° with the base.

4. Separator according to one or more of Claims 1 to 3, **characterised in that** the side facing the inner region encloses an angle of 75° to 115° with the side facing the periphery.

5. Separator according to one or more of Claims 1 to 4, **characterised in that** the sheet material has a thickness of 0.05 to 0.35 mm.

6. Separator according to one or more of Claims 1 to 5, **characterised in that** all the ribs in the peripheral region have the same cross-section.

7. Separator according to one or more of Claims 1 to 6, **characterised in that** 3 to 30 ribs per cm are located in the peripheral region.

8. Lead storage battery containing a plurality of electrodes arranged parallel to one another, neighbouring electrodes possessing opposite polarities and the electrodes of at least one polarity each being enclosed in a separator in accordance with one or more of Claims 1 to 7 that has been folded into a sheath and joined at the edges of the peripheral regions.

## Revendications

1. Séparateur en matière plastique pour accumulateur au plomb, composé d'un matériau en forme de feuille avec une zone interne et deux zones marginales, et au moins sur une face des nervures orientées longitudinalement, dont celles situées dans la zone interne sont plus espacées entre elles que les nervures situées dans la zone marginale, **caractérisé en ce que** dans la zone marginale, au moins les trois premières nervures situées en bordure de la zone interne ont une section dont la forme est celle d'un triangle en saillie sur le matériau en forme de feuille, avec une base sur ce matériau, un côté dirigé vers la zone interne et l'autre côté dirigé vers le bord, le premier côté étant plus long que le second côté.

2. Séparateur, selon la revendication 1, **caractérisé en ce que** le côté dirigé vers la zone interne est 1,5 à 15 fois plus long que le côté dirigé vers le bord.

3. Séparateur selon la revendication 1 ou 2, **caractérisé en ce que** le côté dirigé vers la zone interne fait un angle de 5° à 40° avec la base.

4. Séparateur selon une des revendications 1 à 3, **caractérisé en ce que** le côté dirigé vers la zone interne fait un angle de 75 à 115° avec le côté dirigé vers le bord.

5. Séparateur selon une des revendications 1 à 4, **caractérisé en ce que** le matériau en forme de feuille a une épaisseur de 0,05 à 0,35 mm.

6. Séparateur selon une des revendications 1 à 5, **caractérisé en ce** toutes les nervures dans la zone marginale ont la même section.

7. Séparateur selon une des revendications 1 à 6, **caractérisé en ce qu'**il y a 3 à 30 nervures par centimètre dans la zone marginale.

8. Accumulateur au plomb, contenant plusieurs électrodes parallèles entre elles, les électrodes voisines étant de polarités opposées et au moins les électrodes d'une polarité étant insérées chaque fois dans un séparateur selon une ou plusieurs des revendications 1 à 7, plié de manière à former une poche et relié aux bords des zones marginales.
